# EUROPEAN PATENT APPLICATION

(11) **EP 0 975 104 A1**
(43) Date of publication of application: **26.01.2000**
(21) Application number: 98305813.2
(22) Date of filing: 21.07.1998
(51) Int. Cl.: H04B 10/155, G02F 1/00

(54) **Method and apparatus for generating a modulated optical return to zero signal**

(71) Applicant: LUCENT TECHNOLOGIES INC., Murray Hill, New Jersey 07974-0636 (US)
(72) Inventor: Dorschky, Claus, Eckental 90542 (DE); Teichmann, Bernd, Eckental 90542 (DE); Haunstein, Herbert, Dormitz 91077 (DE)
(74) Representative: Funnell, Samantha Jane

(57) **Abstract**

The present invention generally relates to the field of signal generation and particularly to a method and an apparatus for generating a modulated RTZ signal from a RTZ signal by driving an modulator with a non-RTZ signal.

For the transmission of optical high bit-rate signals over a fibre mainly intensity modulated optical signals are used. To intensity modulate an optical signal with data formed by a bit sequence the optical power of an optical carrier is switched on and off according to the bit sequence. There are non-RTZ signals having a constant high power level for consecutive bits of the bit sequence having a high level, and RTZ signals for which the power level is set back to zero within each bit interval. To correctly modulate the RTZ signal with the electrical non-RTZ signal a fixed phase relation between the two signals is necessary.

The invention under consideration provides a method and an apparatus for automatically aligning the phases of the RTZ signal and the non-RTZ signal by phase modulation of one of the signals with an auxiliary signal and analysing the modulated RTZ signal generated from the signals. The analysis and the phase alignment are based on deviations in the mean signal power of the modulated RTZ signal.

## Description

### TECHNICAL FIELD

The present invention generally relates to the field of signal generation and particularly to a method and an apparatus for generating a modulated return-to-zero (RTZ) signal from a return-to-zero signal by driving an modulator with a non-return-to-zero (non-RTZ) signal.

### BACKGROUND OF THE INVENTION

For the transmission of optical high bit-rate signals over a fibre mainly intensity modulated optical signals are used. To intensity modulate an optical signal with data formed by a bit sequence the optical power of an optical carrier is switched on and off according to the bit sequence. There are non-RTZ signals having a constant high power level for consecutive bits of the bit sequence having a high level, and RTZ signals for which the power level is set back to zero within each bit interval.

It is known to generate an optical RTZ signal from an electrical non-RTZ signal with a modulator, e. g. a interferometer such as a Mach-Zehnder interferometer, a directional coupler, or an electro-absorption modulator. A modulator for generating a data modulated optical RTZ signal is known e. g. from EP 0 718 990 A2, which is incorporated by reference herein.

To generate the data modulated optical RTZ signal an optical RTZ signal is first generated, e. g. by driving a laser with a sinusoidal reference clock signal, having a frequency according to the bit rate. The optical RTZ signal is coupled to a modulator which is driven by an electrical non-RTZ signal, which represents a bit sequence of the data to be modulated on to the optical RTZ signal. The modulated RTZ signal is available at an output of the modulator. To correctly modulate the optical RTZ signal with the electrical non-RTZ signal a fixed phase relation between two signals is necessary. This is because, on the one hand, pulses of the optical RTZ signal forming the logic high level of the modulated RTZ signal should not be distorted and on the other hand pulses of the optical RTZ signal have to be sufficiently suppressed to form the logic low level of the modulated RTZ signal. The phase relationship needed is generated by manually adjusting a delay line delaying one of the signals. This is a cumbersome and time consuming process. Further problems with the phase relation of the non-RTZ signal and the optical RTZ signal are due to temperature change and ageing of components used to generate the modulated RTZ signal. This causes variations in the propagation times of the non-RTZ signal and the optical RTZ signal which results in a phase shift and thus in a deterioration of the modulated RTZ signal.

### SUMMARY OF THE INVENTION

Accordingly, it is an object of the present invention to provide method for generating a modulated RTZ signal from a RTZ signal by driving a modulator with a non-RTZ signal. It is the aim of the inventive method under consideration to avoid the drawbacks known from the state of the art.

The object is achieved by providing a method for generating a modulated RTZ signal using as input signals an RTZ signal and a non-RTZ signal, where the input signals are phase aligned by adding a phase deviation to one of the input signals and analysing the generated modulated RTZ signal to phase align the input signals.

It is an other object of the present invention to provide an apparatus for generating a modulated RTZ signal from an RTZ signal by driving a modulator with a non-RTZ signal. It is the aim of the inventive apparatus under consideration to avoid the drawbacks known from the state of the art.

The object is achieved by providing an apparatus for generating a modulated RTZ signal having means for generating an RTZ signal and a modulator for modulating the RTZ signal with a non-RTZ signal, characterised by means for generating a periodic signal, means for modulating said periodic signal to RTZ signal, and means for analysing the modulated RTZ signal, and for phase aligning the RTZ signal to the non-RTZ signal on the basis of said analysis.

An advantage of the present invention is that it allows automatic phase alignment of the input signals for generating a modulated RTZ signal in the presence of temperature changes or ageing of components, without the necessity of manual adjustments.

The present invention will become more fully understood from the detailed description given hereinafter and further scope of applicability of the present invention will become apparent. However, it should be understood that the detailed description is given by way of illustration only, since various changes and modifications within the spirit and scope of the invention will become apparent to those skilled in the art.

### BRIEF DESCRIPTION OF THE DRAWINGS

The following detailed description is accompanied by drawings of which
- Fig. 1: is a schematic diagram showing an embodiment of an apparatus for generating a modulated optical RTZ signal according to this invention,
- Fig. 2: is a schematic diagram showing a second embodiment of means for generating an optical RTZ signal as used in Fig. 1,
- Fig. 3: represents in part a) an optical RTZ signal; in part b) an electrical non-RTZ signal; and in part c) a modulated optical RTZ signal generated form the signals as shown in parts a) and b) of Fig. 3,
- Fig. 4: represents a typical transfer characteristic for an optical modulator being driven by an electrical non-RTZ signal and a resulting optical non-RTZ signal, and
- Fig. 5: represents modulated optical RTZ signals according to this invention.

Identical denotations in different Figures represent identical elements. Thin lines coupling components of the Figures represent electrical couplings. Bold lines coupling components of the Figures represent optical couplings.

### DETAILED DESCRIPTION

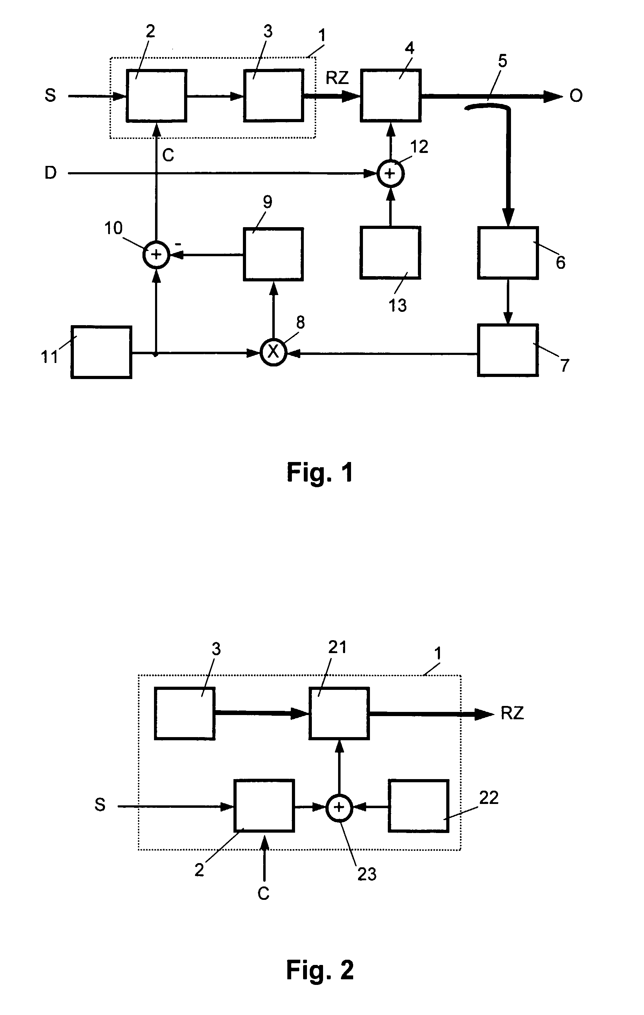

Depicted in Fig. 1 is a schematic diagram showing an embodiment of an apparatus for generating a modulated optical RTZ signal according to this invention. The apparatus includes means 1 for generating an optical RTZ signal, an optical modulator 4, a coupler 5, a photo converter 6, a first low-pass 7, a multiplier 8, a second low-pass 9, a signal generator 11, two adders 10 and 12, and a bias voltage generator 13.

The means for generating an optical RTZ signal 1 includes a signal generator 2, e. g. a phase locked loop having a voltage controlled oscillator, and a light source 3, e. g. a laser, which is driven by the output signal of the voltage controlled oscillator 2. The voltage controlled oscillator 2 has a first input S to synchronise the oscillator 2 to a reference clock signal, e. g. a reference clock signal used in an optical transmission system, and a second input C for a control voltage, the generation of which will be explained below, to control the phase of the output signal of the voltage controlled oscillator 2. The optical RTZ signal is available at an output RZ of means 1, being the output of the laser 3.

Fig. 2 shows a second embodiment of means 1 for generating an optical RTZ signal, which includes a signal generator 2, e. g. a voltage controlled oscillator, and a light source 3, e. g. a laser, which operates as a continuous wave laser. Means 1 further includes an optical modulator 21 with an input for the output of laser 3 and an input for an electrical control signal which is formed by an adder 23 of a bias voltage of a bias voltage generator 22 and the signal of the voltage controlled oscillator 2. The voltage controlled oscillator 2 has a first input S to synchronise the oscillator 2 to a reference clock signal, e. g. a reference clock signal used in a optical transmission system, and a second input C for a control voltage, the generation of which will be explained below, to control the phase of the output signal of the voltage controlled oscillator 2. The optical RTZ signal is available at an output RZ of means 1, being the output of the modulator 21.

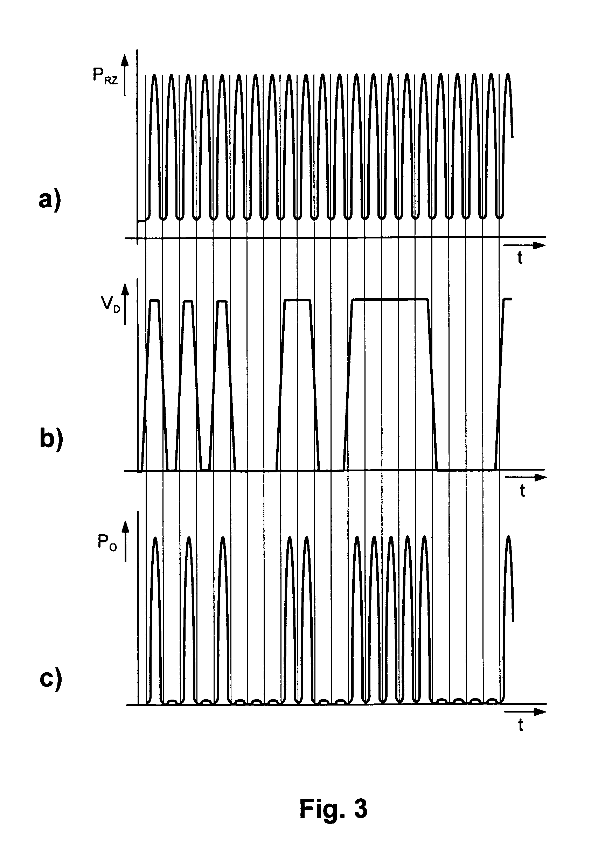

By way of example an optical RTZ signal is shown in Fig. 3 a). It shows a graph of the optical RTZ signal, as available at output RZ of the means 1 for generating the optical RTZ signal, of time t versus optical power P_{RZ}.

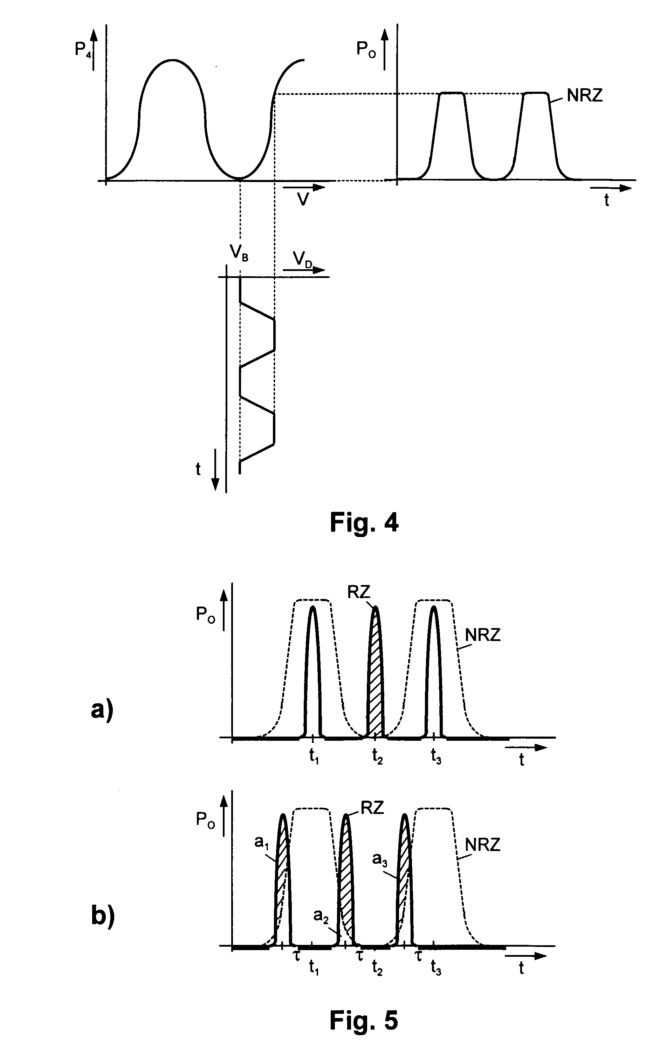

The output signal RZ of the means 1 for generating the optical RTZ signal is coupled to the modulator 4 which generates the modulated optical RTZ signal. The modulated optical RTZ signal is available at an output O. By way of example a modulated optical RTZ signal O is shown in Fig. 3 c). It shows a graph of the modulated optical RTZ signal O of time t versus optical power P_{O}. The modulator is driven via an input D by a non-RTZ voltage signal representing data. By way of example an electrical non-RTZ signal D is shown in Fig. 3 b). It shows a graph of the electrical non-RTZ signal D of time t versus voltage V_{D}, which is used for the modulation of the optical RTZ signal as shown in Fig. 3 a), to form the non-RTZ signal as shown in Fig. 3 c). The input non-RTZ voltage signal D is coupled to adder 12 and a bias voltage V_{B} produced by bias voltage generator 13 can be added to adjust the input non-RTZ voltage signal D to the transfer characteristics of the modulator 4 as shown in Fig. 4.

Fig. 4 shows at the fourth quadrant a graph of voltage V versus power P₄ of the modulator 4, here a Mach-Zehnder modulator, representing the non-linear transfer characteristics of the modulator 4. At the third quadrant of Fig. 4 a graph of time t versus voltage V_{D} of the input non-RTZ voltage signal D is shown. To adjust the input signal D to the transfer characteristics of the modulator 4 the bias voltage V_{B} of the bias voltage generator 13 is added. At the first quadrant of Fig. 4 a graph of time t versus optical power P_{O} is shown, which is generated by modulator 4, if a continuous optical signal is input to modulator 4. In that case the graph represents an optical non-RTZ signal NRZ which is equivalent to input signal D being shaped by the modulator 4 according to the transfer characteristic of the modulator 4.

Fig. 5 a) shows a graph of time t versus optical power P_{O}, representing the modulation of the optical RTZ signal RZ by modulator 4 of Fig. 1. The non-RTZ signal NRZ as explained above with reference to Fig. 4 is shown to facilitate the understanding of the modulation. Also shown is the optical RTZ signal RZ. Both signals RZ and NRZ are phase aligned, i. e. there is no phase deviation between signals RZ and NRZ with regard to times t₁ to t₃. Every time, as shown for t₁ and t₃, both signals RZ and NRZ have a high power level P_{O} the output O of the modulator 4 also shows a high power level. In case the power level P_{O} of signal NRZ is zero, the modulator 4 will suppress signal RZ as indicated by the hatched area, as shown for t₂, thus modulating the RTZ signal RZ with the data contained in the non-RTZ signal NRZ.

Fig. 5 b) shows a graph of time t versus optical power P_{O}, with the RTZ signal RZ and the non-RTZ signal NRZ having a time or phase deviation denoted as τ. As can be seen from Fig. 5 b), the modulation of the RTZ signal RZ is deteriorated if the RTZ signal RZ and the non-RTZ signal NRZ are not properly phase aligned. Hatched areas a₁ and a₃ are suppressed by the modulator 4 resulting in a reduced output level for the pulses of the modulated RTZ signal O at the output of the modulator 4 forming the logic highs. Area a₂ in turn shows the incomplete suppression of pulses of the RTZ signal RZ forming logic lows of the modulated RTZ signal O at the output of the modulator 4.

It also can be seen from Fig. 5 b) that, because of the non-linear transfer characteristics of the modulator 4, the mean output power of the output signal O depends on the time or phase deviation τ between the RTZ signal RZ and the non-RTZ signal D. As the areas a₁ and a₃, which are suppressed due to the phase deviation τ, are bigger than the area a₂, which is added due to the phase deviation τ, the mean output power of signal O is reduced if there is a phase deviation τ.

Following reference to Fig. 1 is made to explained how the reduced output power of signal O is used to automatically phase align the RTZ signal RZ to the non-RTZ signal D. The signal generator 11, e. g. an oscillator, generates an auxiliary signal which causes a periodic phase deviation, e. g. a sinusoidal signal, having a frequency which is low compared to the frequency of the data signal D and the RTZ signal RZ respectively the synchronising signal S, to not negatively influence the signal. As these signals are in the range of GHz in modern optical transmission systems, e. g. 10 GHz, the frequency of the auxiliary signal and thus the periodic phase deviation is in the range of kHz, e. g. 5 kHz. The auxiliary signal is fed to input C of the voltage controlled oscillator 2 being part of the means 1 for generating the optical RTZ signal RZ which is phase modulated by the auxiliary signal to produce the periodic phase deviation. A low frequency modulation of this kind often is referred to as dithering.

The RTZ signal RZ is then modulated as explained above by modulator 4 and the periodic phase deviation causes a reduced mean output power as also explained above. The output signal O of the modulator 4 is fed to coupler 5 which couples out an optical signal having a part of the energy of the output signal O, e. g. five percent of the total energy of the output signal O. The out coupled optical signal is fed to photo converter 6, e. g. a photo diode, and converted to an electrical signal. The electrical signal is coupled to low pass filter 7 which only allows low frequency signals, being in the frequency range of the auxiliary signal, e. g. 5 kHz, to pass. The resulting signal is mixed by multiplier 8 with the auxiliary signal of signal generator 11, causing a demodulation of the resulting signal. The demodulated signal containing information about the direction of the phase deviation between signal RZ and input signal D is then fed to low pass filter 9 to remove higher order signals generated at mixing with multiplier 8. The filtered signal is subtracted with adder 10 from the auxiliary signal generated by signal generator 11 and coupled to input C of the means 1 for generating the RTZ signal RZ. In that way forming an control loop for the phase adjustment.

For those skilled in the art it is obvious that instead of dithering the RTZ signal RZ the input signal D can be dithered.

## Claims

1. Method for generating a modulated RTZ signal using as input signals an RTZ signal and a non-RTZ signal, where the input signals are phase aligned by adding a phase deviation to one of the input signals and analysing the generated modulated RTZ signal to phase align the input signals.

2. Method according to claim 1,
**characterised in that**
said phase deviation is a periodic deviation.

3. Method according to claim 1 or 2,
**characterised in that**
said phase deviation has a frequency substantially lower than the frequency of both of the input signals.

4. Method according to one of the claims 1 to 3,
**characterised in that**
said phase deviation has a sinusoidal form.

5. Method according to one of the claims 1 to 4,
**characterised in that**
the power level of the generated modulated RTZ signal is analysed.

6. Method according to one of the claims 1 to 5,
**characterised in that**
the RTZ signal is an optical signal, and the non-RTZ signal is an electrical signal.

7. Apparatus for generating a modulated RTZ signal (O) having means (1) for generating an RTZ signal (RZ) and a modulator (4) for modulating the RTZ signal (RZ) with a non-RTZ signal (D),
**characterised by**
means (11) for generating a periodic signal, means (10,C,2) for modulating said periodic signal to the RTZ signal (RZ), and means (5 to 10) for analysing the modulated RTZ signal (O), and for phase aligning the RTZ signal (RZ) to the non-RTZ signal (D) on the basis of said analysis.

8. Apparatus according to claim 7,
**characterised in that**
said periodic signal generated by said means for generating (11) has a frequency substantially lower than the frequency of both the RTZ signal (RZ) and the non-RTZ signal (D).

9. Apparatus according to claim 7 or 8,
**characterised in that**
said means for generating (11) said periodic signal generates a sinusoidal signal.

10. Apparatus according to claim 9,
**characterised in that**
said means for generating (11) said periodic signal is an oscillator.

11. Apparatus according to one of the claims 7 to 10,
**characterised in that**
said means (5 to 10) for analysing the modulated RTZ signal (O) analyses the power level of the modulated RTZ signal (O).

12. Apparatus according to one of the claims 7 to 11,
**characterised in that**
the RTZ signal (RZ) is an optical signal, and
the non-RTZ signal (D) is an electrical signal.
